# EUROPÄISCHE PATENTANMELDUNG

(11) **EP 3 647 893 A1**
(43) Veröffentlichungstag der Anmeldung: **06.05.2020**
(21) Anmeldenummer: 18204367.9
(22) Anmeldetag: 05.11.2018
(51) Int. Cl.: G05B 23/02, G06Q 10/06, G05B 19/042

(54) **VERFAHREN UND SYSTEM ZUR ZUSTANDSÜBERWACHUNG EINER TECHNISCHEN EINHEIT**

(71) Anmelder: Siemens Aktiengesellschaft, 80333 München (DE)
(72) Erfinder: Dolfus, Stephan, 91336 Heroldsbach (DE)

(57) **Zusammenfassung**

Die Erfindung bezieht sich auf ein Verfahren zur Zustandsüberwachung einer technischen Einheit (30) mit ein oder mehreren Komponenten (32, 34, 36, 38), umfassend:
(a) Bestimmen (S10) von Parametern (44) der technischen Einheit (30) und/oder ihrer Komponenten (32, 34, 36, 38), die einen Einfluss auf den Zustand der technischen Einheit (30) und/oder ihrer Komponenten (32, 34, 36, 38) haben;
(b) Festlegen (S20) der Messstellen (52) bei einer technischen Einheit (30) und/oder ihrer Komponenten (32, 34, 36, 38) zur Anbringung von Sensoren für die Aufnahme von Messdaten;
(c) Auswählen (S30) von geeigneten Berechnungsalgorithmen (54) für die bestimmten Parameter (44) und Erstellen einer Softwareapplikation;
(d) Implementieren (S40) der Softwareapplikation in einem Datenverarbeitungsmodul der technischen Einheit (30) und/oder ihrer Komponenten (32, 34, 36, 38) und/oder einer externen Einheit wie einer Cloud-Computing-Umgebung;
(e) Überwachen (S50) der technischen Einheit (30) und/oder ihrer Komponenten (32, 34, 36, 38) mit den Sensoren;
(f) Weitergeben der Messdaten der Sensoren an das Datenverarbeitungsmodul, wo sie von der Softwareapplikation verarbeitet werden;
(g) Ausgeben (S70) einer Fehler- oder Alarmmeldung, wenn die Softwareapplikation einen Fehler oder Alarm erkannt hat;
(h) Ausgeben (S80) einer Handlungsempfehlung auf Basis der erkannten Fehler und der Korrelation der erfassten und verarbeiteten Daten.

## Beschreibung

Eine Zustandsüberwachung einer technischen Einheit zielt darauf ab, die Beschaffenheit von einzelnen Komponenten bis hin zu gesamten Antriebssträngen und Anlagen zu beurteilen, um Stillstandzeiten zu vermeiden, Instandhaltungen zu planen und damit Kosten zu senken. Dazu kann es sinnvoll sein, mögliche schädliche Frequenzen im Betriebszustand einer Komponente bzw. eines Antriebsstrangs zu erkennen bzw. zu bestimmen. In Kenntnis dieser Schadfrequenzen - aber auch anderer Messparameter - können Messstellen für eine Sensorik definiert werden und in einem Zustandsüberwachungs-System konfiguriert werden, um Messdaten der Komponente und/oder Anlage zu erfassen. Für die erhaltenen Messdaten werden Berechnungsalgorithmen definiert und konfiguriert, um daraus beispielsweise Informationen über Erreger- und/oder Schadfrequenzen zu erhalten. Diese Frequenzen und daraus berechnete Indikatoren wie KPIs (Key Performance Indicators) können dann überwacht werden, um bei auftretenden Veränderungen mögliche entstehende Schäden an den der technischen Einheit und den einzelnen Komponenten frühzeitig zu erkennen. Diese verschiedenen Schritte in einer Analysekette erfordern ein sehr hohes Maß an Experten-Knowhow und sind zudem in mathematischer Hinsicht komplex und zeitintensiv. Wird nach erfolgreicher Inbetriebnahme einer solchen Zustandsüberwachung ein Alarm gemeldet, ist es erforderlich, einen Experten zu Rate zu ziehen, um den detektierten Fehler an einer Komponente und/oder Anlage zu identifizieren, da bisher eine automatisierte Fehlererkennung keine annehmbaren Resultate liefert.

Es ist somit bisher ein Experte mit einem entsprechenden Expertenwissen im Bereich der Zustandsüberwachung erforderlich, um die Überwachung einer technischen Einheit wie einer Industrieanlage durchzuführen.

Eine Aufgabe der vorliegenden Erfindung besteht daher darin, ein Verfahren und ein System für eine Zustandsüberwachung einer technischen Einheit und ihrer Komponenten zu schaffen, das sich durch eine hohe Zuverlässigkeit auszeichnet und dabei weniger komplex und zeitintensiv ist.

Diese Aufgabe wird hinsichtlich eines Verfahrens durch die Merkmale des Patentanspruchs 1, und hinsichtlich eines Systems durch die Merkmale des Patentanspruchs 8 erfindungsgemäß gelöst. Die weiteren Ansprüche betreffen bevorzugte Ausgestaltungen der Erfindung.

Gemäß eines ersten Aspekts betrifft die Erfindung ein Verfahren zur Zustandsüberwachung einer technischen Einheit mit ein oder mehreren Komponenten umfassend:
- Bestimmen von Parametern der technischen Einheit und/oder ihrer Komponenten, die einen Einfluss auf den Zustand der technischen Einheit und/oder ihrer Komponenten haben;
- Festlegen der Messstellen bei einer technischen Einheit und/oder ihrer Komponenten zur Anbringung von Sensoren für die Aufnahme von Messdaten;
- Auswählen von geeigneten Berechnungsalgorithmen für die bestimmten Parameter und Erstellen einer Softwareapplikation;
- Implementieren der Softwareapplikation in einem Datenverarbeitungsmodul der technischen Einheit und/oder ihrer Komponenten und/oder einer externen Einheit, insbesondere in einer Cloud-Computing-Umgebung;
- Überwachen der technischen Einheit und/oder ihrer Komponenten mit den Sensoren;
- Weitergeben der Messdaten der Sensoren an das Datenverarbeitungsmodul, wo sie von der Softwareapplikation verarbeitet werden;
- Ausgeben einer Fehler- oder Alarmmeldung, wenn die Softwareapplikation einen Fehler anhand der verarbeiteten Messdaten erkennt; und
- Ausgeben einer Handlungsempfehlung auf Basis der erkannten Fehler und der Korrelation der erfassten und verarbeiteten Daten.

Gemäß einer vorteilhaften Weiterentwicklung des Verfahrens ist eine Benutzerschnittstelle zum Erstellen der Softwareapplikation vorgesehen.

Vorteilhafterweise kann ein graphisches Modell der technischen Einheit und/oder ihrer Komponenten erstellt werden.

In einer bevorzugten Weiterentwicklung ist eine Datenbank vorgesehen, in der Daten hinsichtlich der Eigenschaften und der Parameter der technischen Einheit und ihrer Komponenten sowie deren Verknüpfung gespeichert sind oder in die diese Daten importiert werden können.

In einer weiteren Ausgestaltung ist bei dem Verfahren eine gespeicherte Bibliothek vorgesehen, die Messstellen für Sensoren an der technischen Einheit und/oder der Komponenten, Berechnungsalgorithmen für die Parameter und Betriebszustände der technischen Einheit und ihrer Komponenten enthält.

Vorteilhafterweise können die Sensoren physikalische und/oder chemische und/oder biologische Messgrößen erfassen.

In einer weiteren Ausgestaltung kann es sich bei den Berechnungsalgorithmen um logische Verknüpfungen, differenziale Ableitungen, Filterverfahren, Hüllenverfahren, Fast Fourier Transformationen, Integralrechnungen und dergleichen handeln.

Gemäß eines zweiten Aspekts betrifft die Erfindung ein System zur Zustandsüberwachung einer technischen Einheit mit ein oder mehreren Komponenten, wobei das System ausgebildet ist, Parameter der technischen Einheit und/oder ihrer Komponenten, die einen Einfluss auf den Zustand der technischen Einheit und/oder ihrer Komponenten haben, zu bestimmen; Messstellen bei einer technischen Einheit und/oder ihrer Komponenten zur Anbringung bzw. zum Vorsehen von Sensoren für die Aufnahme von Messdaten festzulegen; geeignete Berechnungsalgorithmen für die bestimmten Parameter auszuwählen und eine Softwareapplikation zu erstellen; die erstellte Softwareapplikation in einem Datenverarbeitungsmodul der technischen Einheit und/oder ihrer Komponenten und/oder einer externen Einheit, insbesondere einer Cloud-Computing-Umgebung, zu implementieren; die technische Einheit und/oder ihrer Komponenten mit den Sensoren zu überwachen; Messdaten der Sensoren an das Datenverarbeitungsmodul weiterzugeben, wo sie von der Softwareapplikation verarbeitet werden; und eine Fehler- oder Alarmmeldung auszugeben, falls die Softwareapplikation anhand der verarbeiteten Messdaten einen Fehler oder Alarm erkannt hat. Auf Basis der erkannten Fehler und der Korrelation der erfassten und verarbeiteten Daten ist das System ausgebildet, eine Handlungsempfehlung auszugeben.

In einer Weiterentwicklung des Systems ist eine Benutzerschnittstelle zum Erstellen der Softwareapplikation vorgesehen.

Vorteilhafterweise umfasst das System ein graphisches Modell der technischen Einheit und/oder ihrer Komponenten.

In einer weiteren Ausgestaltung ist eine Datenbank vorgesehen, in der Daten hinsichtlich der Eigenschaften und Parameter der technischen Einheit und ihrer Komponenten und ihrer Verknüpfung gespeichert sind oder in die diese Daten aus einer Product Lifecycle Software (PLM) importiert werden können.

Vorteilhaftweise ist eine in einem Datenspeicher gespeicherte Bibliothek vorgesehen, die Messstellen für Sensoren an der technischen Einheit und/oder der Komponenten, Berechnungsalgorithmen für die Parameter und Betriebszustände der technischen Einheit und ihrer Komponenten enthält. Vorteilhafterweise sind die Sensoren ausgebildet, physikalische und/oder chemische und/oder biologische Messgrößen zu erfassen.

In einer weiteren Ausgestaltung kann es sich bei den Berechnungsalgorithmen um logische Verknüpfungen, differenziale Ableitungen, Filterverfahren, Hüllenverfahren, Fast Fourier Transformationen, Integralrechnungen und dergleichen handeln.

Nachfolgend wird die Erfindung anhand eines in der Zeichnung dargestellten Ausführungsbeispiels näher erläutert.

Dabei zeigt:
- Figur 1: eine schematische Darstellung einer Benutzerschnittstelle zur Erstellung einer erfindungsgemäßen Softwareapplikation zur Überwachung des Zustands einer technischen Einheit und/oder ihrer Komponenten;
- Figur 2: ein Flussdiagramm zur Erläuterung der einzelnen Verfahrensschritte eines erfindungsgemäßen Verfahrens.

Zusätzliche Merkmale, Aspekte und Vorteile der Erfindung oder ihrer Ausführungsbeispiele werden durch die ausführliche Beschreibung in Verbindung mit den Ansprüchen ersichtlich.

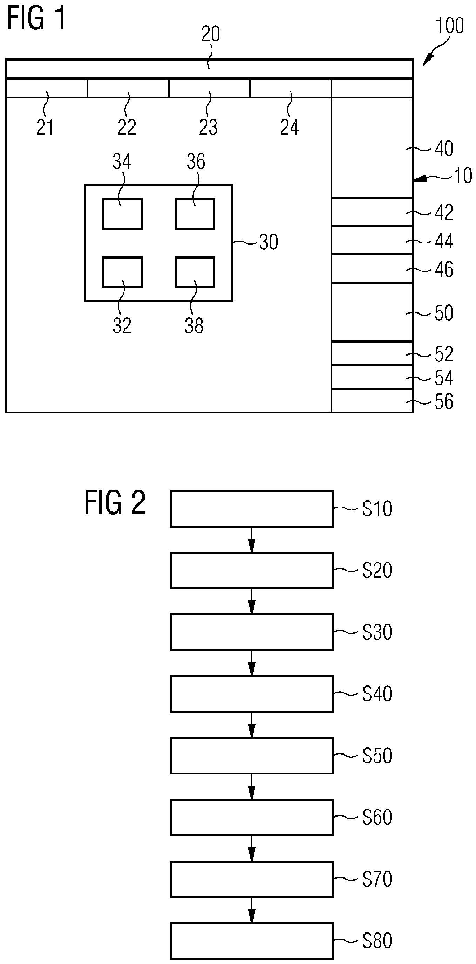

Fig. 1 zeigt eine Benutzerschnittstelle 10 (User Interface) für einen Benutzer zum Erstellen einer Softwareapplikation eines Zustandsüberwachungs-Systems 100. Die Benutzerschnittstelle 10 umfasst einen Editor 20, mit dem ein digitaler Zwilling einer technischen Einheit 30 dargestellt werden kann. Bei der technischen Einheit 30 kann es sich beispielsweise um einen Motor handeln, der aus verschiedenen Komponenten 32, 34, 36, 38 besteht. Es kann sich aber auch z. B. um einen Antriebsstrang einer Industrieanlage handeln.

Der Editor 20 kann verschiedene Elemente 21, 22, 23, 24, 25, enthalten, die Editier-Funktionen wie das Herunterladen eines Bildes aus einer Bilddatei, das Bearbeiten eines Bildes durch Drehen, Verkleinern, Ausschneiden etc., das Abspeichern des Bildes und weitere Funktionalitäten beinhalten. Des Weiteren kann auf eine Datenbank 40 zurückgegriffen werden, die Eigenschaften 42 und Parameter 44 der gesamten technischen Einheit 30 und der Komponenten 32, 34, 36, 38 enthält. Zu den Parametern 44 können beispielsweise Drehzahlfrequenzen und Schadfrequenzen bei einem Motor gehören oder auch das Drehmoment des Motors bei einer bestimmten Geschwindigkeit. Es sind somit Wechselbeziehungen zwischen verschiedenen Parametern 44 einer technischen Einheit 30 darstellbar. Bei komplexen technischen Einheiten 30, wie beispielsweise einem Motor, können somit die einzelnen Komponenten 32, 34, 36, 38 mit ihren möglichen Erregerfrequenzen erfasst werden.

Des Weiteren können aus der Datenbank 40 graphische Bilder 46 der technischen Einheit 30 und ihrer Komponenten 32, 34, 36, 38 heruntergeladen werden, beispielsweise von einem Lager eines Getriebes oder einem Antriebsstrang, so dass ein graphisches Modell der technischen Einheit 30 erstellt werden kann.

Ist die technischen Einheit 30 mit ihren Komponenten 32, 34, 36, 38 in der Datenbank 40 nicht erfasst, so kann der Benutzer die jeweilige technischen Einheit 30 und der Komponenten 32, 34, 36, 38 in der Datenbank 40 aufnehmen.

Für jede technische Einheit 30 und ihrer Komponenten 32, 34, 36, 38 sind somit Informationen bzw. Daten hinsichtlich ihrer Eigenschaften 42, ihrer Parameter 44 und wie diese Parameter miteinander verknüpft sind, in der Datenbank 40 gespeichert. Des Weiteren ist eine Bibliothek 50 vorgesehen, die Messstellen 52 für Sensoren an der technischen Einheit 30 und/oder der Komponenten 32, 34, 36, 38, Berechnungsalgorithmen 54 für Parameter 44 und Betriebszustände 56 der technischen Einheit 30 und ihrer Komponenten 32, 34, 36, 38 enthält. Bei den Sensoren kann es sich beispielsweise um Drucksensoren, Piezosensoren, Drehzahlsensoren und/oder Temperatursensoren handeln. Bei den Berechnungsalgorithmen 54 kann es sich um logische Verknüpfungen, differenziale Ableitungen, Filterverfahren, Hüllenverfahren, Fast Fourier Transformation, Integralrechnung und dergleichen handeln.

Aus den Einzelkomponenten 32, 34, 36, 38 kann ein Nutzer ein graphisches Modell der technischen Gesamteinheit 30 zusammensetzen und designen. Er kann dabei die passenden Komponenten 32, 34, 36, 38 auswählen und die Komponenteneigenschaften 42 aus der Datenbank 40 hinzufügen. Es ist auch möglich, in einer späteren Phase weitere technische Komponenten hinzuzufügen.

Der Benutzer erhält somit eine Übersicht über aller verfügbaren Messstellen 52, Berechnungsmethoden bzw. Berechnungsalgorithmen 54 und Betriebszustände 56 und kann daraus eine Softwareapplikation für die Überwachung der technischen Einheit 30 und ihrer Komponenten 32, 34, 46, 38 erstellen.

Darüber hinaus können Editoren-Rechte vergeben werden, so dass nur ein berechtigter Experte bzw. Nutzer die Softwareapplikation erweitern und editieren kann.

Sobald alle Komponenten 32, 34, 36, 38 mit ihren Eigenschaften 42 in der Datenbank 40 eingepflegt worden sind, wird die erstellte technische Einheit 30 mit einem Dateinamen versehen und in der Datenbank 40 abgespeichert.

Der Benutzer und weitere Benutzer mit entsprechenden Rechten können erstellte und gespeicherte technische Einheiten 30 einsehen und diese dazu verwenden, ein ZustandsüberwachungsProjekt zu erstellen. Besteht eine solche zusammengesetzte komplexe technische Einheit 30 aus bereits vorbekannten Einheiten 30, so können die in der Datenbank 40 abgespeicherten graphischen Modelle automatisch miteinander verknüpft werden, um daraus eine neue Softwareapplikation bestehend aus einer Verkettung von bekannten Softwareapplikationen zu erstellen. Damit können in einfacher Weise komplexe technische Einheiten 30 bestehend aus einer Vielzahl von Sub-Einheiten 30 dargestellt und für sie graphische Modelle und Softwareapplikationen entwickelt werden.

Ein Verfahren zur Zustandsüberwachung einer technischen Einheit 30 gemäß der vorliegenden Erfindung umfasst daher die folgenden Schritte:
In einem Schritt S10 werden Parameter 44 einer technischen Einheit 30 und/oder ihrer Komponenten 32, 34, 36, 38, die einen Einfluss auf den Zustand der technischen Einheit 30 und/oder ihrer Komponenten 32, 34, 36, 38 haben, bestimmt bzw. ermittelt. Hierbei kann es sich bei einem Motor beispielsweise um die Erreger- und/oder Schadfrequenzen handeln.

In einem Schritt S20 werden Messstellen 52 bei einer technischen Einheit 30 und/oder ihrer Komponenten 32, 34, 36, 38 zur Anbringung von Sensoren für die Aufnahme von Messdaten festgelegt.

In einem Schritt S30 werden für die bestimmten Parameter 44 geeignete Berechnungsalgorithmen 54 ausgewählt und daraus wird eine Softwareapplikation erstellt.

In einem Schritt S40 wird die erstellte Softwareapplikation in einem Datenverarbeitungsmodul der technischen Einheit 30 und/oder ihrer Komponenten 32, 34, 36, 38 und/oder einer externen Einheit wie einer Cloud-Computing-Umgebung implementiert.

In einem Schritt S50 wird die technischen Einheit 30 und/oder ihre Komponenten 32, 34, 36, 38 mit den an den Messstellen angebrachten Sensoren überwacht.

In einem Schritt S60 werden die Messdaten der Sensoren an ein Datenverarbeitungsmodul weitergegeben, das die erstellte Softwareapplikation zur Verarbeitung der Messdaten ausführt. In einem Schritt S70 wird eine Fehler- oder Alarmmeldung ausgegeben, wenn die Softwareapplikation einen Fehler erkannt hat.

In einem Schritt S80 wird eine Handlungsempfehlung auf Basis der erkannten Fehler und der Korrelation der erfassten und verarbeiteten Daten ausgegeben.

Gemäß der vorliegenden Erfindung kann eine Zustandsüberwachung einer technischen Einheit bezüglich Komplexität und Zeitaufwand erheblich vereinfacht werden.

Eine Softwareapplikation einer technischen Einheit 30 beinhaltet die gesamten technischen Daten für ein Zustandsüberwachungs-Projekt, so dass eine automatische Zustandsüberwachung durchgeführt werden kann. Nach Erstellung der Softwareapplikation, die vorzugsweise ein graphisches Modell der technischen Einheit 30 enthält, kann diese direkt beispielsweise aus einer Cloud-Computing-Umgebung auf die technische Einheit 30 und/oder ein anderes Endgerät transferiert werden. Dann kann mit der konfigurierten Zustandsüberwachung begonnen werden.

Aus dem graphischen Modell und der Softwareapplikation der technischen Einheit 30 können zentral alle, für eine Auswertung benötigten Informationen errechnet werden. Im Fehlerfall kann durch Auswertung aller verfügbaren Informationen aus erfassten und berechneten Daten sowie deren Korrelation untereinander eine automatische Beurteilung und Handlungsempfehlung abgeleitet werden.

Darüber hinaus können technische Einheiten 30 und Komponenten 32, 34, 36, 38 zwischen Nutzern und Nutzergruppen ausgetauscht werden, die Zugang zu dieser Softwareapplikation haben. Dadurch kann die Erstellung von Zustandsüberwachungs-Projekten weiter vereinfacht werden, da auf einen Pool von bereits erstellten Softwareapplikationen für eine beliebige Anzahl von technischen Einheiten 30 zurückgegriffen werden kann.

Für Komponenten 32, 34, 36, 38, die Drehbewegungen ausführen, wie beispielsweise ein Lager, wird eine automatische Berechnung und Überwachung von kritischen Schadfrequenzen ermöglicht. Dadurch kann eine regelbasierte Fehlererkennung mit Handlungsanweisungen, abhängig von den jeweiligen Schadfrequenzen, durchgeführt werden.

Gemäß der vorliegenden Erfindung kann somit eine Softwareapplikation einer technischen Einheit 30 auf Basis von digitalen Zwillingen der Komponenten 32, 34, 36, 38 der technischen Einheit 30 automatisch erstellt werden, die vorzugsweise das auch eine graphische Modellieren der technischen Einheit 30 mitumfasst. Durch die logische Verknüpfung der Komponenten 32, 34, 36, 38 mit Informationen zu Eigenschaften 42 wie beispielsweise mechanischen Dimensionen und Parametern 44 wie beispielweise Erregerfrequenzen können Berechnungsalgorithmen 54 ausgewählt werden. Eine Zustandsüberwachung der technischen Einheit 30 und ihrer Komponenten 32, 34, 36, 38 wird von der Softwareapplikation durchgeführt, indem Messdaten von Sensoren, beispielsweise mit Sollwerten, die sich aufgrund der bestimmten Parameter und Berechnungsalgorithmen ergeben, verglichen werden.

Somit kann ein vollständiges Zustandsüberwachungsprojekt erstellt und der technische Zustand einer technischen Einheit 30, wie beispielsweise ein Antriebsstrang oder eine einzelne Komponenten 32, 34, 36, 38, überwacht und hinsichtlich ihres Betriebszustandes automatisch beurteilt werden. Damit kann eine Handlungsempfehlung ausgegeben werden, wie mit einer erkannten Fehlersituation umgegangen werden kann.

## Patentansprüche

1. Verfahren zur Zustandsüberwachung einer technischen Einheit (30) mit ein oder mehreren Komponenten (32, 34, 36, 38), umfassend:
(a) Bestimmen (S10) von Parametern (44) der technischen Einheit (30) und/oder ihrer Komponenten (32, 34, 36, 38), die einen Einfluss auf den Zustand der technischen Einheit (30) und/oder auf den Zustand von deren Komponenten (32, 34, 36, 38) haben;
(b) Festlegen (S20) von Messstellen (52) bei einer technischen Einheit (30) und/oder bei deren Komponenten (32, 34, 36, 38) zur Anbringung von Sensoren für die Aufnahme von Messdaten;
(c) Auswählen (S30) von geeigneten Berechnungsalgorithmen (54) für die bestimmten Parameter (44) und Erstellen einer Softwareapplikation;
(d) Implementieren (S40) der Softwareapplikation in einem Datenverarbeitungsmodul der technischen Einheit (30) und/oder einer derer Komponenten (32, 34, 36, 38) und/oder einer externen Einheit, insbesondere in einer Cloud-Computing-Umgebung;
(e) Überwachen (S50) der technischen Einheit (30) und/oder einer derer Komponenten (32, 34, 36, 38) mit den angebrachten Sensoren;
(f) Weitergeben der Messdaten der Sensoren an das Datenverarbeitungsmodul, das die implementierte Softwareapplikation zur Verarbeitung der Messdaten ausführt;
(g) Ausgeben (S70) einer Fehler- oder Alarmmeldung, sobald die Softwareapplikation einen Fehler anhand der verarbeiteten Messdaten erkennt; und
(h) Ausgeben (S80) einer Handlungsempfehlung auf Basis der erkannten Fehler und der Korrelation der erfassten und verarbeiteten Daten.

2. Verfahren nach Anspruch 1, **dadurch gekennzeichnet, dass** eine Benutzerschnittstelle (10) zum Erstellen der Softwareapplikation vorgesehen ist.

3. Verfahren nach Anspruch 1 oder 2, **dadurch gekennzeichnet, dass** ein graphisches Modell der technischen Einheit (30) und/oder ihrer Komponenten (32,34, 36, 38) erstellt wird.

4. Verfahren nach einem oder mehreren der vorausgehenden Ansprüche 1-3, **dadurch gekennzeichnet, dass** eine Datenbank (40) vorgesehen ist, in der Daten hinsichtlich der Eigenschaften (42) und der Parameter (44) der technischen Einheit (30) und ihrer Komponenten (32, 34, 36, 38) sowie deren Verknüpfung gespeichert sind oder in die diese Daten importiert werden.

5. Verfahren nach einem oder mehreren der vorausgehenden Ansprüche 1-4, **dadurch gekennzeichnet, dass** eine Bibliothek (50) vorgesehen ist, die Messstellen (52) für Sensoren an der technischen Einheit (30) und/oder der Komponenten (32, 34, 36, 38), Berechnungsalgorithmen (54) für die Parameter (44) und Betriebszustände (56) der technischen Einheit (30) und ihrer Komponenten (32, 34, 36, 38) enthält.

6. Verfahren nach einem oder mehreren der vorausgehenden Ansprüche 1-5, **dadurch gekennzeichnet, dass** die Sensoren physikalische und/oder chemische und/oder biologische Messgrößen erfassen.

7. Verfahren nach einem oder mehreren der vorausgehenden Ansprüche, **dadurch gekennzeichnet, dass** es sich bei den Berechnungsalgorithmen (54) um logische Verknüpfungen, differenziale Ableitungen, Filterverfahren, Hüllenverfahren, Fast Fourier Transformationen, Integralrechnungen und dergleichen handelt.

8. System (100) zur Zustandsüberwachung einer technischen Einheit (30) mit ein oder mehreren Komponenten (32, 34, 36, 38), wobei das System (100) ausgebildet ist, Parameter (44) der technischen Einheit (30) und/oder ihrer Komponenten (32, 34, 36, 38), die einen Einfluss auf den Zustand der technischen Einheit (30) und/oder ihrer Komponenten (32, 34, 36, 38) haben, zu bestimmen; Messstellen (52) bei einer technischen Einheit (30) und/oder einer von deren Komponenten (32, 34, 36, 38) zur Anbringung von Sensoren für die Aufnahme von Messdaten festzulegen; geeignete Berechnungsalgorithmen (54) für die bestimmten Parameter (44) auszuwählen und eine Softwareapplikation zu erstellen, die erstellte Softwareapplikation in einem Datenverarbeitungsmodul der technischen Einheit (30) und/oder einer von deren Komponenten (32, 34, 36, 38) und/oder einer externen Einheit, insbesondere einer Cloud-Computing-Umgebung, zu implementieren, die technische Einheit (30) und/oder ihrer Komponenten (32, 34, 36, 38) mit den angebrachten Sensoren zu überwachen, Messdaten der Sensoren an das Datenverarbeitungsmodul weiterzugeben, welches die Softwareapplikation verarbeitet die Messdaten ausführt; eine Fehler- oder Alarmmeldung auszugeben, sobald die Softwareapplikation anhand der verarbeiteten Messdaten einen Fehler erkennt; und eine Handlungsempfehlung auf Basis der erkannten Fehler und der Korrelation der erfassten und verarbeiteten Daten auszugeben.

9. System (100) nach Anspruch 8, **dadurch gekennzeichnet, dass** eine Benutzerschnittstelle (10) zum Erstellen der Softwareapplikation vorgesehen ist.

10. System (100) nach Anspruch 8 oder 9, **dadurch gekennzeichnet, dass** ein graphisches Modell der technischen Einheit (30) und/oder ihrer Komponenten (32, 34, 36, 38) erstellt wird.

11. System (100) nach einem oder mehreren der vorausgehenden Ansprüche 8-10, **dadurch gekennzeichnet, dass** eine Datenbank (40) vorgesehen ist, in der Daten hinsichtlich der Eigenschaften (42) und Parameter (44) der technischen Einheit (30) und ihrer Komponenten (32, 34, 36, 38) und ihrer Verknüpfung gespeichert sind oder in die diese Daten importierbar sind.

12. System (100) nach einem oder mehreren der vorausgehenden Ansprüche 8-11, **dadurch gekennzeichnet, dass** eine Bibliothek (50) vorgesehen ist, die Messstellen (52) für Sensoren an der technischen Einheit (30) und/oder der Komponenten (32, 34, 36, 38), Berechnungsalgorithmen (54) für die Parameter (44) und Betriebszustände (56) der technischen Einheit (30) und deren Komponenten (32, 34, 36, 38) enthält.

13. System (100) nach einem oder mehreren der vorausgehenden Ansprüche 8-12, **dadurch gekennzeichnet, dass** die Sensoren ausgebildet sind, physikalische und/oder chemische und/oder biologische Messgrößen zu erfassen.

14. System (100) nach einem oder mehreren der vorausgehenden Ansprüche 8-13, **dadurch gekennzeichnet, dass** es sich bei den Berechnungsalgorithmen (54) um logische Verknüpfungen, differenziale Ableitungen, Filterverfahren, Hüllenverfahren, Fast Fourier Transformationen, Integralrechnungen und dergleichen handelt.

15. Computerprogramm mit Programmcode, der zur Ausführung des Verfahrens nach einem der Ansprüche 1 bis 7, auf einem Prozessor ausführbar ist.
